# EUROPEAN PATENT APPLICATION

(11) **EP 4 641 759 A1**
(43) Date of publication of application: **29.10.2025**
(21) Application number: 23931708.4
(22) Date of filing: 15.08.2023
(51) Int. Cl.: H01M 10/613, H01M 10/615, H01M 10/617, H01M 10/625, H01M 10/658, H01M 10/6554, H01M 10/6568, H01M 50/30, H01M 50/258, H01M 50/249, H01M 50/204, H01M 50/293, H01M 50/233, H01M 50/264, A62C 3/16

(54) **BATTERY CELL HORIZONTALLY-ARRANGED MODULE HAVING THERMAL RUNAWAY PROTECTION STRUCTURE**

(30) Priority: 04.04.2023 CN 202310351781
(71) Applicant: Hefei Gotion High-Tech Power Energy Co., Ltd., Hefei, Anhui 230012 (CN)
(72) Inventor: YIN, Faqing, Hefei, Anhui 230012 (CN); CAO, Mingwei, Hefei, Anhui 230012 (CN); LIU, Hao, Hefei, Anhui 230012 (CN); LI, Shijing, Hefei, Anhui 230012 (CN); DU, He, Hefei, Anhui 230012 (CN); CHENG, Shan, Hefei, Anhui 230012 (CN); YANG, Dan, Hefei, Anhui 230012 (CN); YANG, Hongyan, Hefei, Anhui 230012 (CN); ZHANG, Tie, Hefei, Anhui 230012 (CN)
(74) Representative: Winter, Brandl - Partnerschaft mbB
(86) International application number: PCT/CN2023/113059
(87) International publication number: WO 2024/207659

(57) **Abstract**

Provided is a cell horizontally-arranged module having a thermal runaway protection structure. The cell horizontally-arranged module comprises a cell module, an insulation protection member, an end plate, a connecting shell and a cooling member, wherein the cell module comprises a battery unit and a fireproof heat insulation layer; the battery unit and the fireproof heat insulation layer are alternately stacked, and the battery units are stacked in a thickness direction, such that the cell module is horizontally placed; the fireproof heat insulation layer prevents heat from being transferred to an adjacent battery unit via a side surface after the battery unit is in thermal runaway; output electrode plates are provided at two ends of the cell module; the insulation protection members are arranged on the output electrode plates, and the end plates are arranged outside the insulation protection members; the insulation protection members prevent the output electrode plates from coming into contact with the end plates after the cell module is in thermal runaway; and the connecting shell is arranged on a side face of the horizontally-arranged cell module, the connecting shell is connected to the end plates, and the cooling member is arranged on the connecting shell. The height of a chassis of a new energy vehicle is limited, the number of stacked layers of the horizontally-arranged module is relatively small, and the thermal diffusion safety level is high.

## Description

### Technical Field

The present invention relates to the technical field of lithium-ion battery, in particular to a cell horizontally-arranged module having a thermal runaway protection structure.

### Background Art

Lithium-ion batteries are used as high-capacity and long-life environment-friendly batteries. The new energy vehicle industry has developed rapidly in the past five years. Frequent occurrence of spontaneous combustion events of vehicles, especially in hot summer, is mainly caused by improper operations for lithium-ion batteries and the quality of the batteries themselves. The safety problem has been the biggest question point for the lithium-ion batteries, and is also a pain point in the industry.

The height of a chassis of a new energy vehicle is limited, conventional lithium-ion batteries are placed vertically and independently during installation, and the vertically placed batteries are usually limited in size, have high requirements for the size when used, and cannot be stacked due to the size problem. Heat of the vertically placed batteries is also usually removed by means of an exhaust channel which also needs to occupy parts of space.

In summary, a cell horizontally-arranged module having a thermal runaway protection structure is urgently needed.

### Summary of the Invention

The object of the present invention is to provide a cell horizontally-arranged module having a thermal runaway protection structure to solve the problem that there is a high requirement for sizes of lithium-ion batteries due to an influence from a placement space in the above-mentioned background art.

In order to achieve the above-mentioned object, the present invention adopts the following technical solutions:
a cell horizontally-arranged module having a thermal runaway protection structure, including a cell module, a heat insulation layer, a connecting shell and a connecting component, wherein the connecting shell is arranged outside of the cell modules, the connecting component is arranged at end of an output electrode plate of the cell modules and between the cell modules, the cell module comprises a battery unit and a fireproof layer, the fireproof layer is arranged between the battery units connected in series, and the battery unit is stacked in a direction perpendicular to a large surface of the cell module such that the cell module is horizontally placed, and the heat insulation layer is filled in a space between two adjacent battery units and a space between the two adjacent battery units and the connecting shells.

For the cell horizontally-arranged module having a thermal runaway protection structure, preferably, the heat insulation layer comprises a structural adhesive which is grid-shaped, the structural adhesive is coated in the space between the two adjacent battery units and coated outside of the cell module, wherein the structural adhesive coated in the space between the two adjacent battery units is transversely coated, the structural adhesive coated outside of the cell module is longitudinally coated, a transversely coated structural adhesive and a longitudinally coated structural adhesive cross to form the grid-shaped structural adhesives, and the cell module is connected with the connecting shell via the grid-shaped structural adhesive.

For the cell horizontally-arranged module having a thermal runaway protection structure, preferably, the heat insulation layer comprises a ceramicized silicone foam strip and a structural adhesive, the ceramicized silicone foam strip is filled in the space between the two adjacent battery units, the structural adhesive is longitudinally coated outside of the cell module, and the cell module is connected with the connecting shell by the structural adhesive.

For the cell horizontally-arranged module having a thermal runaway protection structure, preferably, the battery unit comprises a plurality of independent batteries, and the batteries are connected in parallel and are adhesively bonded.

For the cell horizontally-arranged module having a thermal runaway protection structure, preferably, the fireproof layer is fireproof foam, and two sides of the fireproof foam are adhesively fixed with the battery units.

For the cell horizontally-arranged module having a thermal runaway protection structure, preferably, the connecting component comprises an insulation protection member, an end plate and a liquid cooling plate, the insulation protection member are arranged at end of the output electrode plate, the end plate is arranged outside of the insulation protection member, the insulation protection member prevents the output electrode plate from coming into contact with the end plate after the cell module is in thermal runaway, the connecting shell is connected with the end plate, the liquid cooling plate is arranged between the cell modules, and the liquid cooling plate is welded with the connecting shell.

For the cell horizontally-arranged module having a thermal runaway protection structure, preferably, a plurality of pressure relief guide holes are formed in the connecting shell. After the cell module is in thermal runaway, internal pressure of the cell module can be released via the pressure relief guide holes.

For the cell horizontally-arranged module having a thermal runaway protection structure, preferably, the insulation protection member comprises a tray and an insulating cover, the tray is arranged on end of the output electrode plate, and the insulating cover is arranged between the end plate and the tray.

For the cell horizontally-arranged module having a thermal runaway protection structure, preferably, the insulating cover and the tray are both made of a UL94-V0 flame-resistant material. For the cell horizontally-arranged module having a thermal runaway protection structure, preferably, the connecting shell is C-shaped.

Due to the adoption of above technical solutions, the present invention has the following advantages:
1. The transversely coated structural adhesives or the ceramicized silicone foam strips are transversely filled on the fireproof foam among strings of the battery units to form complete heat insulation among the strings, such that single-string or single-battery-cell level NP (no propagation) can be achieved.
2. Most of cells are vertically placed. In the present invention, for horizontally-arranged cells, the height of a chassis of a new energy vehicle is limited, the number of stacked layers of the horizontally-arranged module is relatively small, and the thermal diffusion safety level is high.
3. The transversely coated structural adhesives are located inside the gaps of the adjacent battery units, i.e., two sides of the fireproof foam, to form the complete heat insulation of the adjacent battery units and prevent heat from being transferred to an adjacent battery unit via a side surface after a battery unit is in thermal runaway, thereby avoid the entire cell modules from being in thermal runaway.
4. The longitudinally coated structural adhesives are longitudinally coated to form a grid-shaped structure with the transversely coated structural adhesives, such that the cell modules are better bonded with the connecting shells to guarantee high structural strength.
5. Two sides of the fireproof foam are bonded, which can provide a bonding force for the adjacent battery units and relieve rapid capacity reduction caused by sharp increase of expansibility of the battery units.
6. The plurality of pressure relief guide holes are formed in the side surfaces of the connecting shells, which is beneficial to the release of the internal pressures via the pressure relief guide holes after the cell modules are in thermal runaway.
7. The connecting shells are welded together with a cooling member. Compared with conventional thermal management for a cell arranged alone, the present invention not only achieves heating by liquid cooling on one vertical surface of a flexibly packed cell, but also achieves heating on another vertical surface by adopting a heating resistance wire or a liquid cooling channel, and the double-layer heating is more uniform and effective, and is beneficial to the normal use of the cell modules in extreme weather.

### Brief Description of the Drawings

Fig. 1 is a schematic structural diagram of a cell horizontally-placed module;
Fig. 2 is an exploded view of a cell horizontally-placed module;
Fig. 3 is an exploded view of a cell module;
Fig. 4 is a schematic structural diagram of a connecting shell;
Fig. 5 is a schematic structural diagram of a grid-shaped structural adhesive; and
Fig. 6 is a sectional view of a local transverse structural adhesive of a connecting shell.

In the drawings:
1, cell module; 2, end plate; 3, insulating cover; 4, tray; 5, connecting shell; 6, grid-shaped structural adhesive; 6-1, transversely coated structural adhesive; 6-2, longitudinally coated structural adhesive; 7, battery unit; 8, liquid cooling plate; 9, pressure relief guide hole, 10, fireproof foam; 11, heat-conductive structural adhesive; 12, double-sided adhesive.

### Detailed Description of the Invention

In order to make objects, technical solutions and advantages of the present invention clearer, the technical solutions of the present invention will be described clearly and completely below in conjunction with the accompanying drawings. Obviously, the described embodiments are a part of the embodiments of the present invention, not all the embodiments. Based on the embodiments in the present invention, all other embodiments obtained by those of ordinary skill in the art without creative work shall fall within the protection scope of the present invention.

In the description of the present invention, it should be noted that directional or positional relationships indicated by terms such as "side surface", "first" and "second" are based on directional or positional relationships as shown in the accompanying drawings, and are only for the purposes of facilitating describing the present invention and simplifying the description, rather than indicating or implying that the referred system or element has to have a specific direction or be constructed and operated in the specific direction, and therefore, they cannot be regarded as limitations on the present invention.

In the description of the present invention, it should be noted that terms "arranged" and "provided with" should be understood in a broad sense unless clearly specified and defined otherwise, for example, connection may be fixed connection or detachable connection or integral connection, may be mechanical connection or electrical connection, may be direct connection or indirect connection through an intermediate medium, and may be internal connection of two elements. For those of ordinary skill in the art, specific meanings of the above-mentioned terms in the present invention may be understood according to specific situations.

The present invention provides a cell horizontally-arranged module having a thermal runaway protection structure, including a cell module, a heat insulation layer, a connecting shell and a connecting component, wherein the connecting shell is arranged outside of the cell module, the connecting component is arranged at end of output electrode plate of the cell module, the cell module includes a battery unit and a fireproof layer, the fireproof layer is arranged between the battery units connected in series, and the battery unit is stacked in a direction perpendicular to large surface of cell such that the cell module is horizontally placed, and the heat insulation layer is filled in a space between adjacent battery units and a space between the adjacent battery units and the connecting shell.

In the present invention, a transversely coated structural adhesive or a ceramicized silicone foam strip on side surface of a module are transversely filled on fireproof foam among string of the battery unit to form complete heat insulation among the strings, such that single-string or single-battery-cell level NP (no propagation) can be achieved. Most of cells are vertically placed. In the present invention, for horizontally-arranged cells, the height of a chassis of a new energy vehicle is limited, the number of stacked layers of the horizontally-arranged module is relatively small, and the thermal diffusion safety level is high.

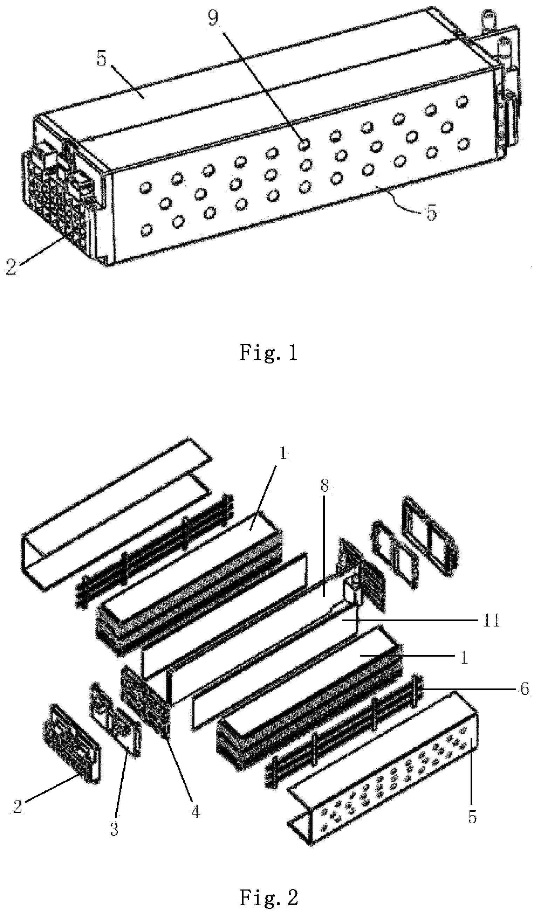

Referring to Fig. 1 and Fig. 2, a cell horizontally-arranged module having a thermal runaway protection structure includes a cell module 1, a heat insulation layer, a connecting shell 5 and a connecting component; and

For the cell horizontally-arranged module having a thermal runaway protection structure, preferably, a fireproof layer is fireproof foam, and two sides of the fireproof foam are fixed with the battery units by bonding.

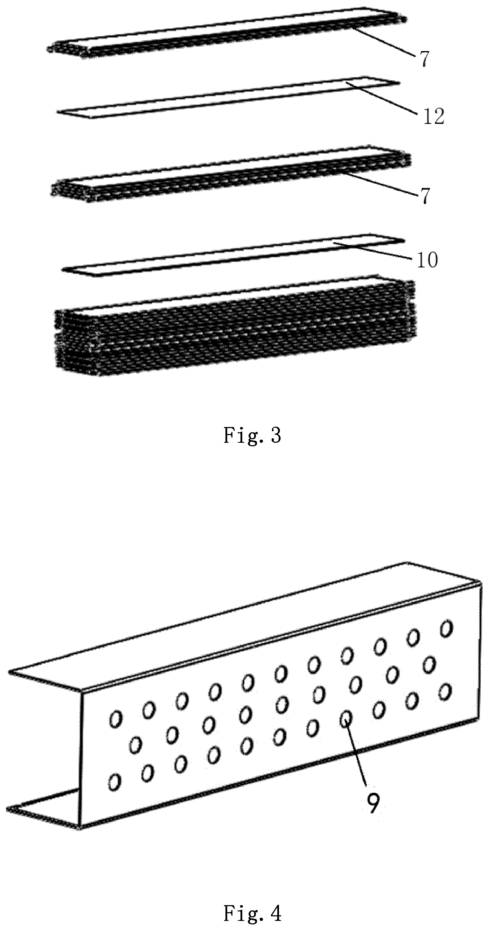

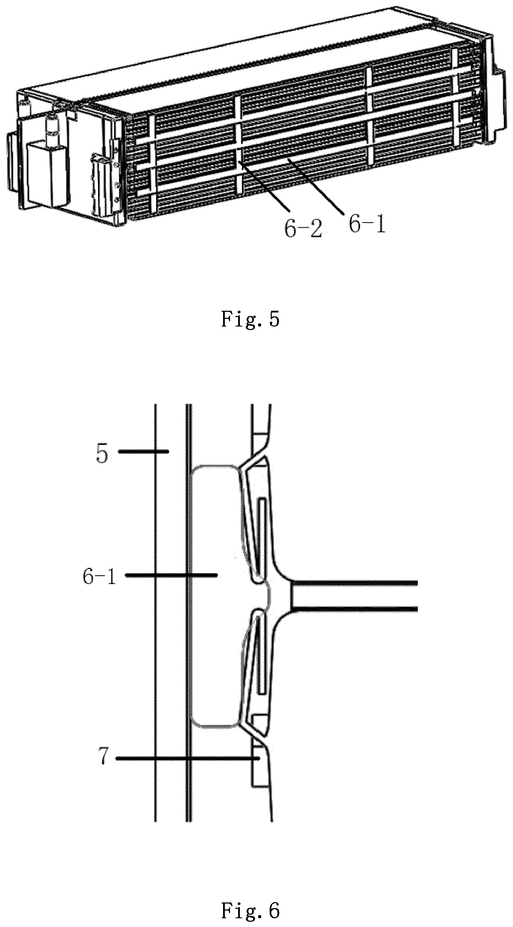

Referring to Fig. 3, the cell module 1 includes a battery unit and a fireproof layer, and the fireproof layer is arranged among all the battery units 7 connected in series. Preferably, the fireproof layer is fireproof foam 10, and all the battery units 7 are stacked in a direction perpendicular to large surfaces of the cell, that is, are stacked along the longest sides of the battery units 7 such that the cell modules 1 are horizontally placed. Referring to Fig. 5, the heat insulation layer is filled in a space between adjacent battery units 7 and a space between the adjacent battery units 7 and the connecting shell 5.

The fireproof foam 10 plays expansion buffering and fireproof roles, two sides of the fireproof foam 10 are fixed with the battery unit 7 by bonding, which can provide a bonding force for adjacent cells, effectively relieve rapid capacity reduction caused by sharp increase of expansibility of the cells, and provide a help for the longer cycle life of the cells; and the fireproof foam also has a UL94-V0 level fireproof performance and can delay head spreading under an extreme thermal runaway condition, the number of stacked layers of the horizontally-arranged module is relatively small, and the thermal diffusion safety level is high. Each battery unit 7 includes a plurality of independent batteries, and the batteries are connected in parallel and are bonded by double-sided adhesives 12.

Further referring to Fig. 1 and Fig. 2, the heat insulation layers are arranged between the outsides of the cell modules 1 and the connecting shells 5, the connecting components are arranged on ends of output electrode plates of the cell modules 1, the connecting component includes an insulation protection member, an end plate 2 and a liquid cooling plate 8, the insulation protection member includes a tray 4 and an insulating cover 3, the tray 4 is installed on end of the output electrode plate after stacking the battery units 7 is completed, the insulating cover 3 is provided with buckles and is arranged between the end plate 2 and the tray 4, the insulating cover 3 and the tray 4 are both made of a UL94-V0 flame-resistant material to prevent the output electrode plates from coming into contact with the end plate 2 after the cell module 1 is in thermal runaway, thereby playing a role in insulation protection.

The liquid cooling plate 8 is arranged between the cell modules 1, the cell module 1 is bonded with the liquid cooling plate 8 by the heat-conductive structural adhesive 11, the liquid cooling plate 8 is located between the two piles of cell modules 1, heat transferring to the cell module 1 on the other side can also be effectively hindered even if the cell module 1 on one side is in thermal runaway, the two connecting shells 5 are welded together by laser, the spliced connecting shells 5 are laser-spliced and welded on the liquid cooling plate 8 to fix an entire module frame, and thus, the modality and the structural strength are higher. The liquid cooling plate 8 is spliced and welded by adopting an extruded aluminum profile or a stamped plate, the liquid cooling plate 8 is provided with a cavity providing a cooling liquid flow channel, and by starting the liquid cooling plate when thermal runaway occurs, most of heat can be taken away.

Referring to Fig. 4, the connecting shell 5 is C-shaped, a plurality of pressure relief guide holes 9 are formed in the connecting shell 5, and after the cell module 1 are in thermal runaway, internal pressure of the cell module 1 can be released via the pressure relief guide holes 9.

Referring to Fig. 5 and Fig. 6, the heat insulation layer is a grid-shaped structural adhesive 6 including a transversely coated structural adhesive 6-1 and a longitudinally coated structural adhesive 6-2, the transversely coated structural adhesive 6-1 is coated in a gap between the adjacent battery units 7, the longitudinally coated structural adhesive 6-2 is coated outside of the cell module 1, the transversely coated structural adhesive 6-1 and the longitudinally coated structural adhesive 6-2 cross to form grid-shaped, and the cell module 1 is connected with the connecting shell 5 via the grid-shaped structural adhesive 6.

In another case, the transversely coated structural adhesive 6-1 in the heat insulation layer is replaced with a ceramicized silicone foam strip, the ceramicized silicone foam strip is filled in a gap between the adjacent battery units 7, the longitudinally coated structural adhesive 6-2 is coated outside of the cell module 1, the ceramicized silicone foam strip and the longitudinally coated structural adhesive 6-2 cross to form grid-shaped, and the cell module 1 is connected with the connecting shell 5 by the longitudinally coated structural adhesive 6-2. The ceramicized silicone foam strip is specifically formed by forming ceramic film on a silicone rubber cotton strip by phase change, and the ceramic film has an effect of heat insulation.

The transversely coated structural adhesive 6-1 or the ceramicized silicone foam strip is filled on the fireproof foam 10 among strings of the battery units 7 to form complete heat insulation among the strings and prevent heat from being transferred to an adjacent string of the battery unit 7 via a side surface after a single string of the battery unit 7 is in thermal runaway, thereby avoiding the entire cell modules from being in thermal runaway.

The longitudinally coated structural adhesive 6-2 is used for ensuring that the cell module 1 is better bonded with the connecting shell 5 to guarantee high structural strength. Preferably, when coated, the longitudinally coated structural adhesive 6-2 is coated for 100mm-150mm every time. Finally, it should be noted that above embodiments are only intended to describe the technical solutions of the present invention, rather than to limit them. Although the present invention has been described in detail with reference to the aforementioned embodiments, it should be understood by those of ordinary skill in the art that the skilled in the art may still modify the technical solutions recorded in each of the aforementioned embodiments or equivalently substitute parts of technical features therein; and these modifications or substitutions do not make the essences of the corresponding technical solutions depart from the spirits and scopes of the technical solutions of all the embodiments of the present invention.

## Claims

1. A cell horizontally-arranged module having a thermal runaway protection structure, wherein it comprises a cell module, a heat insulation layer, a connecting shell and a connecting component, wherein the connecting shell is arranged outside of the cell module, the connecting component is arranged at end of an output electrode plate of the cell module and between the cell modules, the cell module comprise a battery unit and a fireproof layer, the fireproof layer is arranged between the battery units connected in series, and the battery unit is stacked in a direction perpendicular to a large surface of the cell module such that the cell module is horizontally placed, and the heat insulation layer is filled in a space between two adjacent battery units and a space between the two adjacent battery units and the connecting shells.

2. The cell horizontally-arranged module having a thermal runaway protection structure of claim 1, wherein the heat insulation layer comprises a structural adhesive which is grid-shaped, the structural adhesive is coated in the space between the two adjacent battery units and coated outside of the cell module, wherein the structural adhesive coated in the space between the two adjacent battery units is transversely coated, the structural adhesive coated outside of the cell module is longitudinally coated, a transversely coated structural adhesive and a longitudinally coated structural adhesive cross to form the grid-shaped structural adhesives, and the cell module is connected with the connecting shell via the grid-shaped structural adhesive.

3. The cell horizontally-arranged module having a thermal runaway protection structure of claim 1, wherein the heat insulation layer comprises a ceramicized silicone foam strip and a structural adhesive, the ceramicized silicone foam strip is filled in the space between the two adjacent battery units, the structural adhesive is longitudinally coated outside of the cell module, and the cell module is connected with the connecting shell by the structural adhesive.

4. The cell horizontally-arranged module having a thermal runaway protection structure of claim 2 or 3, wherein the battery unit comprise a plurality of independent batteries, and the batteries are connected in parallel and are adhesively bonded.

5. The cell horizontally-arranged module having a thermal runaway protection structure of claim 4, wherein the fireproof layer is fireproof foam, and two sides of the fireproof foam are adhesively fixed with the battery units.

6. The cell horizontally-arranged module having a thermal runaway protection structure of claim 5, wherein the connecting component comprises an insulation protection member, an end plate and a liquid cooling plate, the insulation protection member are arranged at end of the output electrode plate, the end plate is arranged outside of the insulation protection member, the insulation protection member prevents the output electrode plate from coming into contact with the end plate after the cell module is in thermal runaway, the connecting shell is connected with the end plate, the liquid cooling plate is arranged between the cell modules, and the liquid cooling plate is welded with the connecting shell.

7. The cell horizontally-arranged module having a thermal runaway protection structure of claim 6, wherein a plurality of pressure relief guide holes are formed in the connecting shell, and internal pressure of the cell module can be released via the pressure relief guide holes after the cell module is in thermal runaway.

8. The cell horizontally-arranged module having a thermal runaway protection structure of claim 7, wherein the insulation protection member comprises a tray and an insulating cover, the tray is arranged on end of the output electrode plate, and the insulating cover is arranged between the end plate and the tray.

9. The cell horizontally-arranged module having a thermal runaway protection structure of claim 8, wherein the insulating cover and the tray are both made of a UL94-V0 flame-resistant material.

10. The cell horizontally-arranged module having a thermal runaway protection structure of claim 4, wherein the connecting shell is C-shaped.
